Europäisches Patentamt

European Patent Office

Office européen des brevets

(19)

(11) Numéro de publication: **0 122 825**

**A1**

(12) **DEMANDE DE BREVET EUROPEEN**

(21) Numéro de dépôt: 84400473.9

(22) Date de dépôt: 09.03.84

(51) Int. Cl.³: **G 06 K 19/08**
**G 07 F 7/08**

(30) Priorité: **11.03.83 FR 8304054**
**08.07.83 FR 8311429**

(43) Date de publication de la demande:
**24.10.84 Bulletin 84/43**

(84) Etats contractants désignés:
**DE GB NL**

(71) Demandeur: **SOCIETE D'ELECTRONIQUE DE LA REGION PAYS DE LOIRE SEREL**
**74, rue du Surmelin**
**F-75020 Paris(FR)**

(72) Inventeur: **Duret, Bernard**
**THOMSON-CSF SCPI 173, bld Haussmann**
**F-75379 Paris Cedex 08(FR)**

(72) Inventeur: **Guerri, Dall'Oro Guido**
**THOMSON-CSF SCPI 173, bld Haussmann**
**F-75379 Paris Cedex 08(FR)**

(72) Inventeur: **Jollivet, Alain**
**THOMSON-CSF SCPI 173, bld Haussmann**
**F-75379 Paris Cedex 08(FR)**

(72) Inventeur: **Szeger, Anne-Marie**
**THOMSON-CSF SCPI 173, bld Haussmann**
**F-75379 Paris Cedex 08(FR)**

(74) Mandataire: **Chaverneff, Vladimir et al,**
**THOMSON-CSF SCPI 173, Bld Haussmann**
**F-75379 Paris Cedex 08(FR)**

(54) **Carte à lecture optique portant des informations numériques, et système de contrôle d'accès à des informations diffusées utilisant une telle carte.**

(57) Titre ou carte d'accès ou d'abonnement pour un système de contrôle d'accès, notamment, à des informations diffusées, par voie hertzienne ou par câble, dans lesquelles, à l'émission un code d'émission est périodiquement inséré par multiplexage temporel, afin de pouvoir être comparé, à la réception, à un code d'accès stocké sur un titre ou carte à lecture optique.

La carte d'accès ou d'abonnement (5) comprend, outre des barres significatives (2, 3) séparées par des espaces et situées sur deux pistes parallèles (6 et 7) pour respectivement signifier des valeurs "1" et "0" du code d'accès, des barres factices (20, 21, 30, 31, 32, 33) dont les propriétés optiques vis-à-vis de la lumière visible (l'oeil nu ou appareils de photographie ou photocopie) sont analogues à celles des autres barres, et en ce qui concerne des capteurs optiques utilisant un spectre de rayonnement particulier, analogue à celles des espaces qui séparent less barres (5, 6).

Application notamment à un système de contrôle d'accès à des informations diffusées, telle que la télévision à péage.

FIG_6

EP 0 122 825 A1

1

CARTE A LECTURE OPTIQUE PORTANT DES INFORMATIONS
NUMERIQUES ET SYSTEME DE CONTROLE D'ACCES A DES
INFORMATIONS DIFFUSEES UTILISANT UNE TELLE CARTE

La présente invention concerne des cartes à lecture optique portant des informations numériques constituant des messages permettant le contrôle d'accès, notamment à des informations diffusées par voie hertzienne ou par câble (électrique ou à fibres optiques), et des systèmes de contrôle d'accès, notamment, à de telles informations utilisant une carte de ce type.

L'utilisation de titres d'abonnement ou, plus généralement, d'accès sous la forme de cartes portant des messages numériques autorisant l'accès à des services à péage ou, plus généralement, à accès contrôlé (limité), tels que les transports en commun ou des distributeurs de billets de banque, ou à des informations diffusées sous la forme de signaux analogiques brouillés (cryptés) ou de données numériques multiplexées dans le temps et/ou éventuellement codées (également cryptées), est bien connue.

Des messages ou codes d'accès de ce type peuvent être portés par mémoires permanentes du type des cartes perforées (à lecture optique ou par contacts galvaniques) ou magnétiques que l'usager insère dans l'équipement qui comporte un dispositif de lecture de ces cartes en défilement. Le message ou code d'accès ainsi lu est transformé par le dispositif de lecture en une succession de signaux rectangulaires constituant un ou plusieurs mots numériques, transmis séquentiellement, qui peuvent être utilisés de diverses manières dans cet équipement.

Dans un mode d'utilisation simple, ce message ou code d'accès séquentiel fourni par le dispositif de lecture peut être comparé à un autre message engendré à l'intérieur de l'équipement (par le transfert du contenu d'une mémoire morte en parallèle dans un registre à décalage et par la lecture en série de ce registre initiée par le début du message d'accès, par exemple), afin d'en déterminer l'identité. Lorsqu'une telle identité est détectée, l'équipement délivre un signal d'autorisation d'accès ou de validation du message d'accès qui autorise le détenteur d'une carte portant ce message d'accéder à un service déterminé.

Dans un autre mode d'utilisation, le message ou code d'accès séquentiel délivré par le dispositif de lecture est mémorisé par l'équipement (par exemple, en chargeant en série des registres à décalage ou des mémoires vives à accès séquentiel) pour pouvoir ensuite en déterminer l'identité avec l'autre message ou code d'identification d'un service déterminé, qui est fourni à l'équipement par la source de ce dernier. Une telle identité servira également à la fourniture d'un signal d'autorisation ou de validation permettant, par exemple, l'utilisation consécutive du service susmentionné par un appareillage ou dispositif d'exploitation adapté.

La contrefaçon ou l'élaboration frauduleuse des titres d'accès magnétiques est relativement malaisée, puisqu'il faut pour cela disposer d'un dispositif de lecture et d'enregistrement adapté de signaux numériques, pour reproduire sur une bande magnétique le message ou code d'accès porté par ce titre. Par contre, les cartes ou titre d'accès à lecture optique qu'il s'agisse de cartes perforées ou de celles portant une succession de barres et d'espaces, appelée code à barres (voir la revue française ELEKTOR de juin 1981), sont beaucoup plus faciles à reproduire avec suffisamment d'exactitude pour pouvoir remplacer des cartes acquises de façon légale, par simples photocopie ou graphisme sans aucun équipement spécial.

L'invention a pour objet d'éviter cet inconvénient en rendant la reproduction des cartes optiques quasiment impossible sans l'utilisation d'un équipement photographique ou opto-électronique à réponse spectrale particulière.

Suivant l'invention, une carte de lecture optique portant des informations numériques sous la forme d'au moins une succession de barres et d'espaces ayant respectivement des propriétés optiques différentes et détectables au moyen d'un capteur opto-électronique comprenant une source de rayonnement lumineux et un détecteur d'un tel rayonnement, est principalement caractérisée en ce que

3

dans cette succession se trouvent, insérées entre les barres significatives présentant une réponse optique ou spectrale déterminée, des barres factices présentant vis-à-vis de l'oeil ou des appareils de photographie ou photocopie un aspect analogue aux barres significatives, mais par rapport au rayonnement émis par la source du capteur, une réponse analogue à celle des espaces.

L'invention a également pour objet un système de contrôle d'accès utilisant une carte optique de ce type et comprenant un dispositif de distribution de telles cartes.

Suivant une caractéristique avantageuse de l'invention, les barres factices ayant par rapport au rayonnement de la source du capteur une réponse optique ou spectrale analogue à celle du support ou des espaces, occupent tout l'espace sur la piste compris entre les barres significatives successives de manière à former des couches de camouflage.

L'invention sera mieux comprise et d'autres de ses caractéristiques et avantages ressortiront de la description qui suit et des dessins annexés, donnés à titre d'exemple, sur lesquels :

- les figures 1 et 2 illustrent respectivement des vues en plan de deux modes de réalisation possibles d'un support d'informations numériques pouvant être utilisé comme carte d'accès ou d'abonnement dans un système de contrôle d'accès, suivant l'invention ;

- la figure 3 illustre un support d'informations du type de celui de la figure 2 avec une représentation partielle du lecteur optique utilisé pour récupérer les informations numériques stockées sur ce support ;

- la figure 4 illustre les formes d'onde des signaux séquentiels délivrés par un tel lecteur optique ;

- la figure 5 est un schéma synoptique simplifié d'un circuit assurant un mode d'acquisition simple des signaux séquentiels de la figure 4 ;

- la figure 6 illustre en plan une carte utilisant le code à barres double sur laquelle le message ou code d'accès a été brouillé à l'aide de barres-leurres (ou factices), suivant l'invention ; et

4

- la figure 7 est un schéma synoptique simplifié d'un mode de réalisation possible d'un système de contrôle d'accès à des informations diffusées utilisant une carte d'accès de la figure 6, suivant l'invention ;

- la figure 8 est une vue en plan d'un mode de réalisation possible d'un support d'informations numériques à lecture optique utilisant le code à barre double et pouvant être utilisé comme carte d'accès ou d'abonnement dans un système de contrôle d'accès, avec une représentation partielle du lecteur optique utilisé pour récupérer les informations numériques stockées sur ce support ;

- la figure 9 illustre les formes d'onde des signaux séquentiels délivrés par un tel lecteur optique ;

- la figure 10 illustre en plan une carte optique conforme à l'invention, du type utilisant le code à barres doube, sur laquelle le message ou code d'accès a été brouillé à l'aide de barres-leurre (ou factices), suivant l'invention ;

- la figure 11 est une vue en plan de l'un des modes de réalisation de la carte selon ladite caractéristique avantageuse ;

- la figure 12 est une coupe longitudinale selon XII-XII agrandie, d'une carte de la figure 11 ; et

- les figures 13 et 14 sont respectivement des vues en plan et en coupe selon XIV-XIV du mode de réalisation préféré d'une carte à lecture optique selon ladite caractéristique avantageuse.

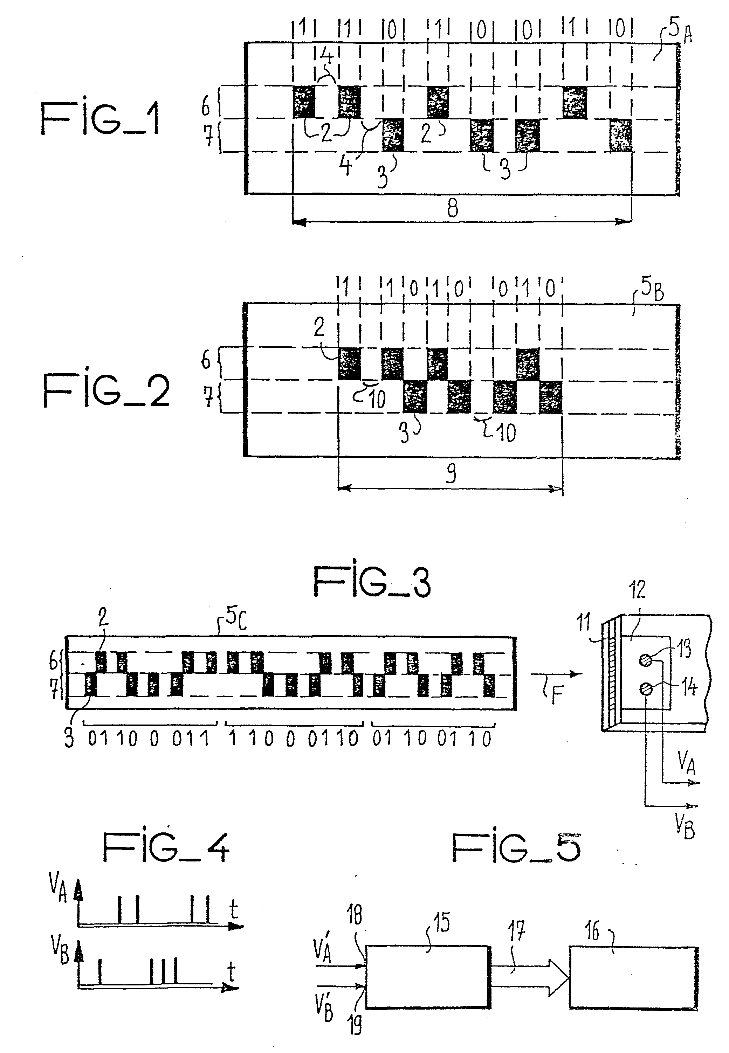

La figure 1 illustre en plan un premier mode de réalisation d'un support d'informations numériques représentées par des barres disposées sur des pistes parallèles.

Sur la figure 1, le support d'informations 5A stocke des informations numériques ("mots") sous la forme d'une séquence d'états binaires pouvant prendre l'une des valeurs logiques "1" ou "0". Les deux états binaires sont représentés par des zones ayant la forme de barres rectangulaires 2, 3 délimitant des zones à coefficient optique de transmission ou de réflexion différents de ceux de leur environnement et notamment différents de ceux des espaces qui séparent deux barres voisines sur une même piste 6, 7 et qui n'ont aucune signification numérique en soi, sauf en ce qui concerne la séparation entre deux mots successifs dont chacun peut être composé, par exemple, de huit éléments binaires ou "bits", d'où l'appellation d'octet. Les barres 2 et 3 ont toutes les mêmes dimensions. Il est à noter que le nombre de bits dans chaque mot est laissé au choix du concepteur du système qui l'utilise.

Chaque mot numérique doit donc être représenté sur deux rangées ou "pistes" parallèles 6 et 7 dont la première 6 contient des barres 2 représentant des états logiques "1" (ou hauts) et dont la seconde 7 contient des barres 3 qui représentent des états logiques "0" (ou bas). Ces barres sont rectangulaires et orientées transversalement par rapport aux axes de pistes 6, 7 qui sont orientées parallèlement à l'axe longitudinal ou l'un des côtés du support 5A, lorsque celui-ci est rectangulaire. Pour obtenir un signal électrique séquentiel en réponse à des informations numériques ainsi stockées sur un support d'informations 5A sous la forme optique, au moyen d'un code à barres dit "double", il est nécessaire d'effectuer la lecture des deux pistes 6 et 7 de manière simultanée, en utilisant un double lecteur optique. Un tel double lecteur est composé de deux capteurs opto-électroniques simples dont les axes optiques sont, de préférence, respectivement orientés normalement aux plans des deux pistes 6, 7 sur le support 5A et situés dans un même plan transversal aux axes de ces dernières.

Sur la figure 1, on a représenté le mot 11010010, si le déplacement relatif du lecteur double et du support se fait de gauche à droite (ou 01001011, si on lit de droite à gauche). Dans ce mode de réalisation du support 5A, les deux pistes 6, 7 sont parallèles et adjacentes et les barres 2 ou 3 successives (en noir) sont espacées l'une de l'autre par des espaces 4 (en blanc) de largeurs (dans le sens de lecture) sensiblement égales à celles des barres 2, 3. Ainsi, lorsque le niveau logique "0" représenté par une barre 3 située sur la piste 7 se trouve entre deux niveaux logiques "1" représentés par des barres 2 sur la piste 6, l'espace séparant ces deux barres 3 est égale à trois espaces élémentaires 4.

6

Il faut donc, pour représenter un nombre N quelconque de n éléments binaires ou bits, une longueur 8 de 2n-1 espaces élémentaires.

Sur la figure 2, le mode de réalisation permet d'augmenter la densité spatiale des informations en réduisant l'espacement entre une barre 2 de la piste 6 et une barre 3 de la piste 7 qui se succèdent, à zéro, c'est-à-dire que la fin d'une barre 2 ou 3 est immédiatement suivie du début d'une barre 3 ou 2. La distance 9 nécessaire à la représentation d'un mot N de n bits n'est plus constante, mais fonction de sa valeur numérique. Elle variera entre 2n-1 espaces élémentaires, lorsque tous les bits sont des "1" ou des "0" et n espaces élémentaires, lorsque les "0" et les "1" alternent.

Il n'est pas nécessaire que les deux pistes 6, 7 soient adjacentes comme sur les figure 1 et 2, il suffit qu'elles soient toutes les deux orientées parallèlement à un même axe ou côté du support 5A ou 5B. Elles peuvent être situées sur deux côtés opposés du support 5A ou 5B, par exemple.

Un tel "code à barre double" présente les avantages suivants :

- Le nombre de symboles disponibles ne dépend que des besoins de l'utilisateur et de la densité spatiale d'informations admissible ;

- La vitesse de lecture n'est limitée vers le haut que par les caractéristiques (temps de réponse) du lecteur optique et non pas par le traitement des signaux, d'où la possibilité du transfert manuel de la carte devant le lecteur ;

- L'acquisition et le traitement des signaux peuvent être assurés d'une façon extrêmement simple et fiable.

Il est important de remarquer que, avec ce code, il s'agit uniquement de discriminer, sur chaque ligne, les barres des espaces, car les informations se présentent seulement sous la forme de séquences spatiales. L'épaisseur des barres ne jouant pas un rôle fondamental (seulement la présence d'une discontinuité étant prise en compte), la qualité de l'impression et de son support deviennent des facteurs secondaires.

La figure 3 illustre un mode d'utilisation d'un support d'information des figures 1 ou 2 avec un lecteur optique double.

Sur la figure 3, le support d'informations 5C de l'invention est représenté avec une succession d'informations de trois octets qui se lisent 01100011, 11000110 et 01100110.

L'acquisition de ces informations peut être effectuée de façon particulièrement simple et fiable. En effet, le lecteur 12 comporte deux organes opto-électroniques de détection 13 et 14 ou capteurs optiques, destinés à lire respectivement les pistes 6 et 7. Il est en outre muni d'une fente 11 permettant l'insertion manuelle du support 5C dans le sens de la flèche F. Le déplacement du support 5C dans le sens longitudinal est guidé par les parois latérales de la fente 11. La lecture optique du support 5C pendant son déplacement longitudinal par les deux capteurs ou organes de détection opto-électronique 13, 14 (ou transducteurs opto-électriques), donne naissance à des successions ou séquences de signaux rectangulaires $V_A$ et $V_B$ dont les premiers $V_A$ représentent les états "1" et les seconds $V_B$ les états "0" des mots binaires séquentiels qui peuvent être acquis par le chargement en série d'un registre à décalage, après mise en forme et combinaison idoine des deux.

La figure 4 représente les formes d'ondes des signaux $V_A$ et $V_B$ fournis par les deux organes de détection 13 et 14. Ensemble, les signaux $V_A$ et $V_B$ représentent le nombre 01100011 qui est le second mot représenté sur le support 5C de la figure 3, lorsqu'il est lu de droite à gauche, c'est-à-dire dans le sens du déplacement symbolisé par la flèche F.

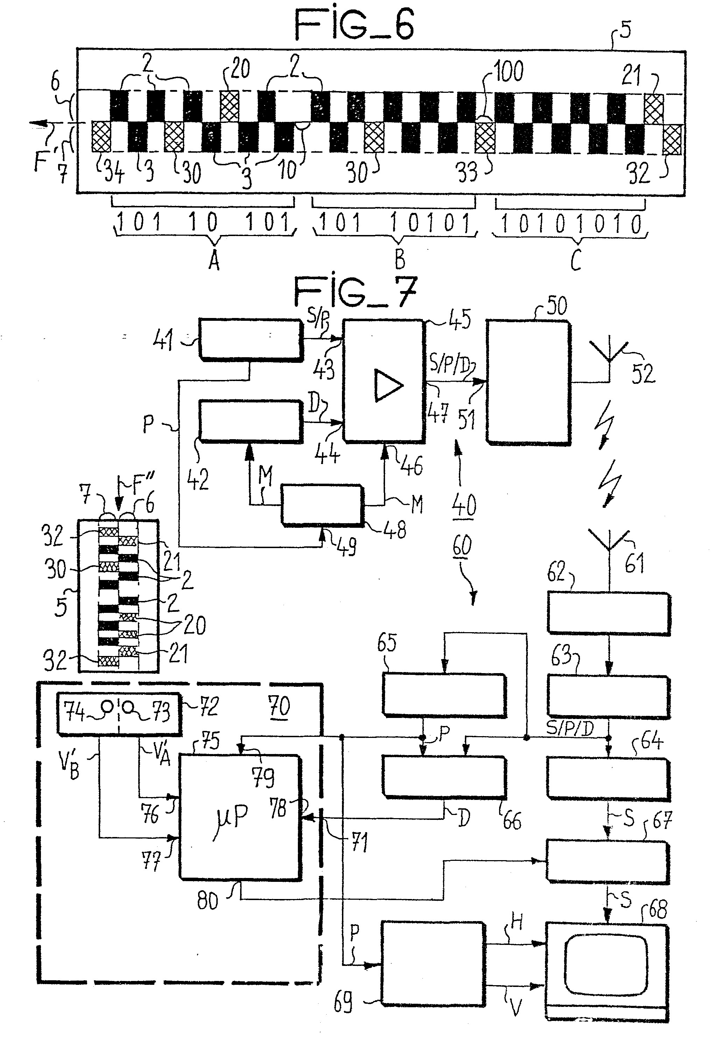

La figure 5 illustre schématiquement un mode d'acquisition particulièrement simple des signaux de sortie $V_A$, $V_B$ du lecteur 12 de la figure 3 par un microprocesseur 15.

Après une mise en forme appropriée des signaux $V_A$ et $V_B$ respectivement fournis par les lecteurs optiques 13 et 14 (de la figure 3), illustrés sur la figure 4, par exemple, en les allongeant de façon à ne pas entrer de fausses informations dans des registres (ou mémoires à entrée série) qui les stockent et les mettent en parallèle (états de sortie de chaque étage bistable), il est possible de les faire entrer directement dans un microprocesseur 15.

Ceci est illustré sur la figure 5, où les signaux après mise en forme $V'_A$ et $V'_B$ sont respectivement appliqués à deux entrées dites "d'interruption" 18 et 19 d'un microprocesseur 15, soit séquentiellement, soit sous forme parallèle après mémorisation dans au moins un registre à décalage dont l'avance peut être commandée par les fronts montants des signaux $V_A$ et $V_B$ de la figure 4, par exemple. Dans ce dernier cas, on ne transmet au microprocesseur 15 les mots contenus dans ce registre qu'après la fin de la lecture du support 5A, 5B, 5C.

Le microprocesseur 15 est représenté ici réuni, en outre, par l'intermédiaire d'un "bus" (de données, par exemple) 17 et, éventuellement, par une unité d'entrée/sortie ou d'interface, non représentée, à un équipement périphérique 16 avec lequel il peut constituer un moyen de contrôle d'accès à des informations diffusées, dont le code d'accès est sur une carte ou un support suivant l'invention.

Le type d'acquisition séquentielle peut être rendue synchrone par l'intermédiaire de registres à décalage à chargement auto-piloté par le signal lui-même et à lecture série avec déchargement ou rebouclage synchronisés par une horloge. Le type d'acquisition séquentielle directe simplifie l'architecture du système de traitement et accroît sa fiabilité. La séparation et l'identification des mots (octets) successifs du support 5A, 5B, 5C peuvent être effectuées par simple comptage des impulsions $V_{13}$ et $V_{14}$ combinées (porte "OU") issues des deux lecteurs, du fait que les états "1" et "0" sont respectivement représentés par des impulsions de même polarité. Il est, par ailleurs, possible de programmer le microprocesseur 15 de telle sorte qu'il combine les excursions positives des signaux provenant des deux lecteurs 13 et 14 (figure 3) en les interprétant respectivement comme des "1" et des "0".

On notera enfin que le support d'informations 5A, 5B ou 5C (des figures 1, 2 et 3 respectivement) utilisant le "code optique à barres double" avec deux pistes orientées parallèlement à son déplacement dans le double lecteur optique (12, figure 3), peut être réalisé de multiples façons. Par exemple, il peut avoir une épaisseur quelconque, un format rectangulaire quelconque (de préférence, compris entre ceux d'un ticket de transport urbain ou d'une carte de crédit), en un matériau quelconque (tel que du papier cartonné ou du matériau plastique) permettant l'impression de barres, transparent, semi-transparent ou opaque (aux rayonnements émis par le lecteur, notamment). Les divers formats et matériaux seront choisis en fonction de la facilité de délivrance de tickets ou de cartes d'abonnement par un poste de distribution automatique (commandé par l'usager) ou non. En plus, les barres peuvent être noires et les espaces clairs ou vice-versa ou de deux couleurs différentes, ou encore les barres ou les espaces peuvent être représentées par des trous.

Comme il a été dit auparavant, le principal inconvénient des cartes d'abonnement ou de contrôle d'accès utilisant un code à barres optique, simple ou double comme décrit ci-dessus, réside dans la facilité de leur reproduction non-autorisée, de manière frauduleuse, par simple photocopie ou analogue, ou par graphisme. Ceci est rendu un peu plus difficile en disposant les deux pistes du code à barre double, sur les côtés opposés de la carte ou du support d'informations. Un support en forme de parallélépipède allongé dont deux côtés opposés ou adjacents et normaux seraient porteurs d'informations rendrait la reproduction frauduleuse encore plus malaisée, mais en augmenterait le prix de revient, ainsi que celui du distributeur et du lecteur optique.

Pour éviter cet inconvénient, la présente invention propose de rajouter aux barres 2 et 3 d'un support du type 5B ou 5C (figures 2 et 3) ayant une réponse optique ou spectrale prédéterminée aux rayonnements émis par la source lumineuse du capteur opto électronique, aux endroits où au niveau d'un espace séparant deux barres 2 ou 3 successives sur une piste 6 ou 7, il n'y a pas de barres 3 ou 2 sur l'autre piste 7 ou 6, de barres factices appelées barre-leurre, ayant un aspect ou apparance visible semblable au barres normales 2 et 3, mais une réponse optique inverse ou spectrale différente de celle de ces dernières, de telle sorte que la réponse du détecteur de rayonnement à leur niveau est analogue à celle correspondant à un espace. Plus précisément, les barres factices ayant sur l'oeil ou la lumière utilisée pour la photocopie un effet analogue aux barres normales ou significatives 2 ou 3, ils présentent, lors de leur lecture par un capteur à réponse spectrale déterminée, un effet analogue à l'absence de barres, c'est-à-dire à un espace de séparation.

La figure 6 est une vue en plan d'une carte optique utilisant le code à barres double, qui a été muni à divers endroits de barres-leurres ou factices représentées à l'aide de hâchures, mais ayant un aspect visible et un effet photographique analogue à celles des barres normales ou significatives.

Sur la carte d'accès 5, le message ou code d'accès D comprend trois mots A, B et C de huit éléments binaires ou bits chacun, qui sont appelés octets ("byte" en anglais). Lorsque l'on utilise le code à barres double selon le mode de réalisation illustré sur les figures 2 et 3, il se produit que quand, dans un octet, une valeur binaire donnée "0" ou "1", représentée par une barre 3 ou 2 sur l'une des pistes 7 ou 6 est suivie n fois (n supérieur à 1) par son complément "1" ou "0" représenté chacun par une barre 2 ou 3 sur l'autre piste 6 ou 7, la prochaine barre 3 ou 2 qui représente la valeur binaire "0" ou "1" consécutive à cette succession de n (supérieur à 1) compléments, est séparée de la barre 3 ou 2 précédente sur la même piste 7 ou 6 de 2n-1 espaces élémentaires vides sur cette piste 7 ou 6.

On peut donc utiliser n-1 de ces 2n-1 espaces vides pour y placer des barres factices qui sont désignées par les repères 20 et 30, lorsqu'elles sont respectivement situées sur les pistes 6 et 7.

Autrement dit, dans un octet constituant un mot du code d'accès, seuls les espaces vides d'une piste donnée 6 ou 7 au niveau desquels l'autre piste 7 ou 6 comporte un autre espace vide et qui sont séparés de deux barres 2 ou 3 consécutives de la même piste 6 ou 7 par au moins un espace vide de chaque côté, peuvent être utilisés comme emplacement de barres factices 20 ou 30.

Sur la figure 6, le mot de gauche A du code d'accès comprend une barre factice 30 sur la piste 7 au niveau d'un espace libre séparant deux barres 2 consécutives sur la piste 6 et une barre factice 20 sur la piste 6 en regard d'un espace libre séparant deux barres 3 consécutives sur la piste 7. Le mot du milieu B ne comprend qu'une barre factice 30 sur la piste 7 et le mot de droite C qui est composé d'une alternance de "1" et de "0", n'en comprend aucune.

D'autres emplacements possibles des barres factices sont avant le début et après la fin du message d'accès. On a ainsi représenté sur la figure 6, une première barre factice 31 précédant la première barre significative 2 du premier mot A (dans le sens de la lecture indiquée par la flèche F') et une seconde barre factice 21 suivant la dernière barre 3 significative du dernier mot C, qui peut être suivie d'une troisième barre factice 32.

Lorsque le dernier digit significatif d'un mot B représenté par une barre 2 ou 3 sur l'une des pistes 6 ou 7 présente la même valeur binaire "1" ou "0" que le premier digit significatif du mot suivant C représenté par une même barre 2 ou 3 qui est séparée de la précédente par un espace 100, il est possible de placer entre les deux mots B et C une barre factice 33 ou 23 sur l'autre piste 7 ou 6.

Par contre, si le dernier digit d'un mot A est complémentaire au premier digit du mot suivant B, l'espace 10 qui sépare les deux mots A et B doit rester libre.

Dans un mode de réalisation de l'invention, où la carte d'accès est réalisée sur un support en papier clair réfléchissant des rayons infrarouges, on peut utiliser, par exemple, pour réaliser des barres significatives 2 ou 3 une encre noire d'imprimerie du type 1807/6 qui absorbe les rayons infrarouges et pour réaliser les barres-leurres ou factices 20, 21, 30, 31, 32 et 33, une encre également noire du type 1863/IR qui est transparente aux rayons infrarouges et qui sont toutes les deux fabriquées par la société française dite "Y'SO" (sise à 80480 Bacouel-sur-Selle).

Lorsque l'on utilise un support qui réfléchit les rayons infrarouges, la lecture optique peut être effectuée à l'aide d'un capteur à réflexion, tel qu'un photointerrupteur (appelé "OPIC" par son fabricant) du type GP-2A01 fabriqué par la société japonaise dite "SHARP CORPORATION" (sise à Osaka au Japon). Un tel capteur comporte une source de rayonnement infrarouge constituée par une diode émettrice de lumière en arséniure de gallium (AsGa), un élément détecteur de rayonnement (de type "OPIC") constitué par une photodiode ayant une réponse spectrale appropriée précédée d'un filtre optique éliminant la lumière visible, qui est suivie en cascade d'un amplificateur opérationnel intégré muni d'un circuit de commande automatique de niveau ("automatic level control" en anglais), d'une bascule de Schmitt et d'un étage de sortie équipé d'un transistor bipolaire à collecteur ouvert. La photodiode étant au silicium, cet ensemble, à l'exception de la diode émettrice d'infrarouge (As,Ga) est réalisé sur un même substrat sous la forme d'un circuit intégré monolithique. Un tel capteur fournit un signal rectangulaire ou impulsionnel (grâce à la présence de la bascule de Schmitt) dont les niveaux sont compatibles avec ceux des circuits intégrés logiques de type TTL, par exemple.

Alternativement, lorsque le support utilisé absorbe les rayons infrarouges, l'encre utilisée pour les barres factices devra également les absorber, et il faudrait utiliser pour les barres significatives une encre de même couleur réfléchissant les rayons infrarouges (ou les recouvrir d'un vernis réflecteur).

On peut voir de ce qui précède que, lorsque l'on utilise le code à barres double dans sa version de la figure 2, où la succession de deux signaux complémentaires dans un octet est représentée par des barres 2, 3 successives respectivement placées sur les deux pistes 6, 7 sans espacement entre elles dans le sens de la lecture, il faut déterminer les emplacements des barres factices ou barres-leurre, d'une part, selon la valeur numérique des octets pour détecter une succession de digits de même valeur et, d'autre part, par l'identité de valeur binaire entre le dernier digit d'un octet et le premier digit d'un octet suivant, ou encore suivant les valeurs binaires respectifs du premier et du dernier digit du message ou code d'accès.

Ceci peut être réalisé à l'aide d'un microprocesseur qui, après avoir calculé le message ou code d'accès d'après le code de la nature du service et, éventuellement, le code de la période d'abonnement ou d'accès autorisé, le met en mémoire et l'analyse de façon à déterminer les emplacements possibles des barres factices. Les résultats du calcul de ces emplacements peuvent également être mémorisés suivant leurs valeurs numériques correspondantes dans deux registres distincts. La mise en mémoire des digits significatifs du code d'accès peut être effectuée sur deux registres dont l'un mémorise la succession des valeurs binaires calculées et l'autre leurs compléments, afin de respectivement commander, lorsqu'on les lit en série, l'impression successive des barres significatives sur les deux pistes 6 (valeur normale) et 7 (complément). Les registres contenant les barres-leurres peuvent être lues en série simultanément avec ceux contenant les barres significatives de façon à commander respectivement l'impression des barres factices à encre transparente aux rayons infrarouges et des barres significatives à encre absorbante.

On remarquera ici que lorsque l'on utilise le code à barre double dans son mode de présentation de la figure 1, où chaque barre significative 2, 3 de chaque octet, est séparée par un espace élémentaire 4 de la barre significative 2 ou 3 qui la précède et de celle qui lui succède, quelle que puisse-t-être sa valeur numérique, c'est-à-dire indifféremment de la piste 6, 7 où elle se trouve placée, il est possible d'insérer des barres-leurres entre deux barres significatives de manière aléatoire avec pour unique effet d'allonger l'espace entre ces dernières.

Il est également à noter que si l'on utilise tout autre type de code à barres où la largeur d'espacement entre les barres significatives n'a pas de signification numérique, il est également possible d'insérer des barres-leurres entre les barres significatives de façon aléatoire. Avec un code à barres tel que l'UPC ("United Product Code") où les espaces ont une signification numérique, mais où l'on rencontre des espaces de triple longueur, on peut le brouiller en ce qui concerne la lumière visible par l'insertion d'une barre-leurre de longueur unitaire au milieu de celle-ci, à condition de n'utiliser pour leur lecture optique que des capteurs analogues à ceux du type décrit, à réponse spectrale limitée à l'infra-rouge, qui permettent d'assimiler les barres-leurre à des espaces.

Dans le mode de réalisation préféré d'un titre ou d'une carte d'accès ou d'abonnement, on utilise un support plan de format rectangulaire, où l'une des pistes 6 ou 7 est imprimée sur l'un des côtés et l'autre piste 7 ou 6 sur l'autre côté du support. Il est également avantageux d'utiliser un support en matériau plastique d'une certaine épaisseur et présentant des propriétés optiques analogues à ceux des barres-leurres vis-à-vis du capteur utilisé, les barres significatives ayant des propriétés optiques inverses (soit absorption et réflexion, soit transmission et réflexion, en encore transmission et absorption, c'est-à-dire transparence et opacité), les encres respectivement utilisées devant présenter sensiblement la même couleur en contraste avec celle du support. Autrement dit, la réponse des deux encres à la lumière visible, vis-à-vis de l'oeil nu ou des équipements photographiques ou de photocopie, doit être sensiblement la même, tout en assurant dans une bande spectrale déterminé une réponse différente. Le capteur opto-électronique de lecture devra donc utiliser une source émettant du rayonnement dans cette bande spectrale et un détecteur de ce rayonnement avec une réponse spectrale analogue où précédé d'un filtre éliminant le reste du spectre.

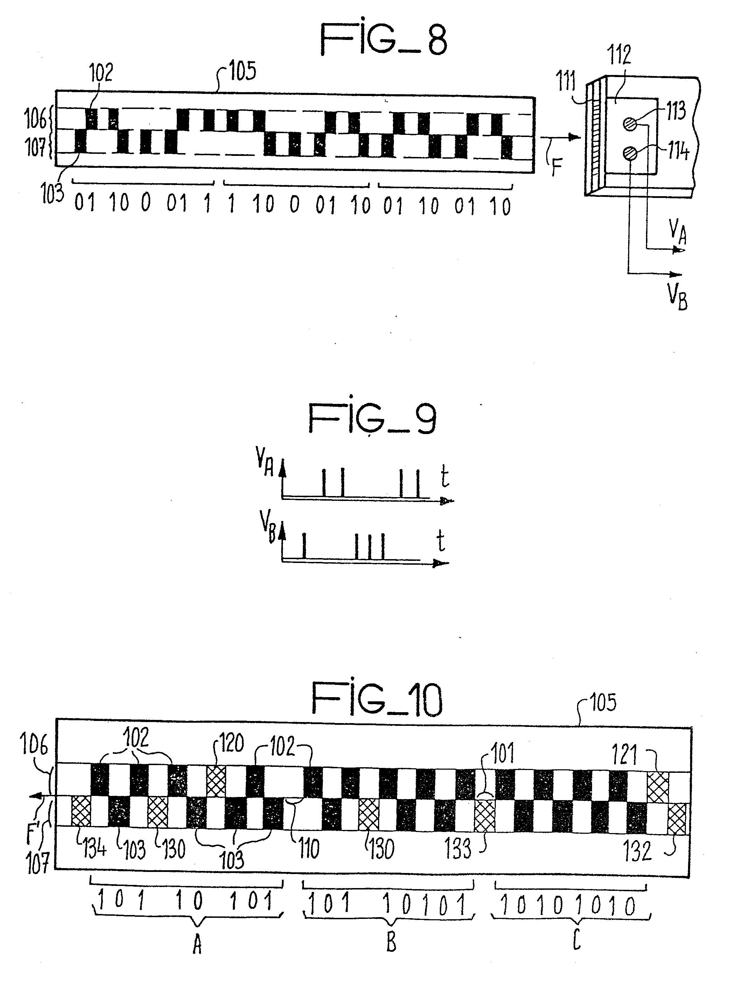

La figure 7 illustre un schéma synoptique simplifié d'un mode de réalisation simple d'un système de contrôle d'accès à un service déterminé, tel que des informations diffusées sous forme numérique ou analogique, cryptés ou en clair, par voie hertzienne ou par câble. On notera ici qu'en ce qui concerne la réception des informations analogiques diffusées qui ne sont pas cryptées il n'est pas possible d'en contrôler l'accès. Pour la simplicité de l'exposé on omettra dans ce qui suit les systèmes de cryptage et de décryptage qui ont été

15

décrits dans certaines des publications précitées et ne constituent qu'une application possible de l'invention.

Sur la figure 7, on a représenté en 40 un poste émetteur servant à diffuser par voie herztienne les informations en question sous la forme d'un signal électrique composé d'un signal utile S avec un signal de synchronisation P périodiquement inséré, fourni par un premier générateur de signal 41. Le poste émetteur 40 comporte en outre, un second générateur de signaux numériques séquentiels 42 qui élaborent le code d'émission D identifiant la nature ou la source du service, c'est-à-dire le premier générateur 41 du signal utile S dont on doit contrôler l'accès.

Pour pouvoir transmettre le code d'émission D périodiquement à la place du signal utile S/P par une même voie, les sorties des générateurs 41 et 42 sont respectivement reliées aux entrées de signal 43 et 44 d'un multiplexeur 45 dont l'entrée de commande 46 reçoit des signaux rectangulaires M (à deux niveaux) d'aiguillage qui permettent alternativement de relier soit l'entrée 43, soit l'entrée 44 à la sortie 47 du multiplexeur 45 (qui est ici analogue à un inverseur). Ces signaux rectangulaires proviennent d'un générateur de signaux périodiques 48 ou de multiplexage qui commande également le début et la durée de transmission du code d'émission D et qui est commandé ou synchronisé au moyen du signal de synchronisation P fournie par une autre sortie du générateur du signal utile 41, par exemple. Le signal de synchronisation P détermine la périodicité du multiplexage, c'est-à-dire la récurrence des signaux rectangulaires M qui le commandent.

La sortie 47 du multiplexeur 45 fournit donc alternativement les signaux S/P et D, la récurrence et la durée du multiplexage ayant été choisis de façon à ne pas nuire à l'intelligibilité du signal S (lui-même multiplexé avec le signal P), à l'entrée de modulation 51 d'un émetteur 50 dont la sortie alimente une antenne d'émission 52 omnidirectionnelle, par exemple. L'émetteur 50 diffuse par l'intermédiaire de l'antenne 52 une onde porteuse haute-fréquence modulée (en amplitude ou en fréquence) par les signaux multiplexés S/P/D.

L'onde électromagnétique diffusée par rayonnement est reçue par un poste récepteur 60 dont l'antenne de réception 61 la transforme en signal électrique haute-fréquence qui appliqué à un sélecteur de programme (ou de canaux ou de stations) comprenant un filtre haute-fréquence d'entrée accordable, un mélangeur hétérodyne et un oscillateur local à fréquence variable, et un amplificateur de fréquence intermédiaire contenus dans l'élément 62.

La sortie de ce dernier alimente l'entrée d'un démodulateur (d'amplitude ou de fréquence) 63 qui fournit les signaux S/P/D multiplexées, en parallèle à une voie d'amplification du signal utile S 64, à un circuit de séparation des signaux de synchronisation P 65 qui ont été multiplexés en amplitude avec les signaux S, il suffit donc d'opérer par ecrêtage (ou ébasage) ou discrimination de niveaux pour récupérer le signal P de forme rectangulaire, et à un démultiplexeur 66 ou extracteur du signal D. Cet extracteur 66 reçoit, en outre, les signaux P qui commandent à l'émission l'élaboration des signaux de multiplexage M et du code d'émission D. Donc, à partir des signaux de synchronisation P, l'extracteur élabore un signal rectangulaire correspondant au signal M qui commande une porte incorporée ne devenant passante que pendant la transmission du code D. On récupère ainsi le code d'identification de l'émission D qui est appliqué à l'entrée 71 du dispositif de contrôle d'accès aux informations diffusées 70 utilisant une carte d'accès optique 5, suivant l'invention. Ce dispositif 70 comporte, notamment, un lecteur optique 72 double, muni de deux capteurs opto-électroniques 73 et 74 à réponse spectrale particulière, adaptée pour assimiler les barres factices 20, 21, 30 et 32 du support 5 à des espaces, du type de ceux décrit précédemment, qui sont respectivement disposées de façon à lire les informations inscrites sur les pistes 6, 7 pendant l'insertion du support dans la fente (11, fig.3), en prenant en compte uniquement les barres significatives 2, 3.

Les sorties du lecteur double 72 alimentent, respectivement comme sur la figure 5, deux entrées d'interruption 76 et 77 d'un microprocesseur 75 qui mémorise les signaux $V'_A$ et $V'_B$ de façon combinée en considérant les premiers comme des "1" et les seconds comme des "0" logiques, dans un registre ou une case de mémoire vive (RAM) qui fournit le code d'accès. D'autre part, la sortie de l'extracteur (démultiplexeur) 66 fournit le code d'émission D sous la forme séquentielle à l'entrée 78 du microprocesseur 75 à un autre registre qui a été préalablement réinitialisé (remis à zéro) par des impulsions R de réinitialisation présentes dans les signaux de synchronisation P, appliquées à l'entrée 79 et précédant légèrement le premier digit du code d'émission D transmis. Cet autre registre stocke le code d'émission qui est comparé dans le microprocesseur 75 au code d'accès mémorisé, en provenance du lecteur optique 72 de la carte 5. Lorsque le microprocesseur 75 détecte une identité entre le code d'accès et le code d'émission D, il fournit sur sa sortie 80 un signal de validation de ou d'autorisation d'accès V à l'information S véhiculée par la voie du signal 64. Le signal de validation V est appliqué à l'entrée de commande d'une porte électronique 67 insérée entre la sortie de la voie de signal 64 et l'entrée d'un dispositif de traitement et de visualisation éventuelle du signal S 68, qui comporte à cette fin deux autres entrées respectivement alimentées par les sorties d'un circuit de synchronisation de l'affichage 69 (par balayage orthogonal) dont l'entrée reçoit les signaux synchronisation P (mélangés) et dont il extrait les signaux de synchronisation horizontale H et verticale V.

Le système de contrôle d'accès décrit ci-dessus, qui comporte à l'émission : le générateur du code d'émission D 42, le multiplexeur 45 et le générateur de signaux de commande M 48 pour ces deux éléments et à la réception : le séparateur de synchronisation 65, l'extracteur du code D 66, le dispositif de contrôle d'accès 70 et la porte électronique 67, ne constitue qu'une illustration très schématique d'un moyen d'utilisation possible de la carte d'accès 5, suivant l'invention.

Des systèmes beaucoup plus sophistiqués et perfectionnés ont été décrits dans les publications FR-A-2 313 825, 2 404 350 et

18

FR-E-2 393 480, 2 404 350 et 2 506 100, où en dehors du code d'émission D la carte porte des informations en ce qui concerne la période d'accès, ainsi que dans les publications 2 448 824, 2 448 825, 2 448 826 et 2 459 595, où le contrôle d'accès est assuré non seulement par un code définissant ensemble la nature du service et la date d'émission, mais également par un code de cryptage variable définissant le cryptage du signal utile. La carte d'accès suivant l'invention est applicable, notamment, à tous ces systèmes en leur assurant un titre d'accès et un lecteur de ce titre à un coût relativement faible.

Il est à remarquer que le dispositif de lecture de la carte optique suivant l'invention, peut comporter d'autres capteurs opto-électroniques, non décrits ici, pouvant être respectivement destinés à contrôler ou vérifier l'absence ou la présence d'une carte dans le lecteur et, éventuellement, commander le début du processus d'acquisition en détectant l'insertion du bout antérieur de la carte, par exemple.

Le système de contrôle d'accès illustré sur la figure 7, comporte encore un distributeur de titres d'accès qui n'a pas été représenté, mais dont les fonctions qu'il doit remplir et les opérations logiques qu'il doit effectuer ressortent avec une clarté suffisante de la description de la carte d'accès ou d'abonnement suivant l'invention, représentée sur la figure 6.

La figure 8 illustre en plan un mode de réalisation d'un support d'informations numériques représentées par des barres disposées sur des pistes parallèles.

Sur la figure 8, le support d'informations 105 stocke des informations numériques ("mots") sous la forme d'une séquence d'états binaires pouvant prendre l'une des valeurs logiques "1" ou "0". Les deux états binaires sont représentés par des zones ayant la forme de barres rectangulaires 102, 103 délimitant des zones à coefficient optique de transmission ou de réflexion différents de ceux de leur environnement et notamment différents de ceux des espaces qui séparent deux barres voisines sur une même piste 106, 107 et qui n'ont aucune signification numérique en soi, sauf en ce qui concerne la séparation entre deux mots successifs dont chacun peut être composé, par exemple, de huit éléments binaires ou "bits", d'où l'appellation d'octet. Les barres 102 et 103 ont toutes les mêmes dimensions. Il est à noter que le nombre de bits dans chaque mot est laissé au choix du concepteur du système qui l'utilise.

Chaque mot numérique doit donc être représenté sur deux rangées ou "pistes" parallèles 106 et 107 dont la première 106 contient des barres 102 représentant des états logiques "1" (ou hauts) et dont la seconde 107 contient des barres 103 qui représentent des états logiques "0" (ou bas). Ces barres sont rectangulaires et orientées transversalement par rapport aux axes de pistes 106, 107 qui sont orientés parallèlement à l'axe longitudinal ou à l'un des côtés du support 105, lorsque celui-ci est rectangulaire. Pour obtenir un signal électrique séquentiel en réponse à des informations numériques ainsi stockées sur un support d'informations 105 sous la forme optique, au moyen d'un code à barres dit "double", il est nécessaire d'effectuer la lecture des deux pistes 106 et 107 de manière simultanée, en utilisant un double lecteur optique. Un tel double lecteur est composé de deux capteurs opto-électroniques simples dont les axes optiques sont, de préférence, respectivement orientés normalement aux plans des deux pistes 106, 107 sur le support 105 et situés dans un même plan transversal par rapport aux axes de ces dernières.

Il n'est pas nécessaire que les deux pistes 106, 107 soient adjacentes comme sur la figure 8, il suffit qu'elles soient toutes les deux orientées parallèlement à un même axe ou côté du support 105. Elles peuvent être situées sur deux côtés opposés du support 105, par exemple.

Sur la figure 8, le support d'informations 105 de l'invention est représenté avec une succession d'informations de trois octets qui se lisent 01100011, 11000110 et 01100110.

L'acquisition de ces informations peut être effectuée de façon particulièrement simple et fiable. En effet, le lecteur 112 comporte

deux organes opto-électroniques de détection 113 et 114 ou capteurs optiques, destinés à lire respectivement les pistes 106 et 107. Il est en outre muni d'une fente 111 permettant l'insertion manuelle du support 105 dans le sens de la flèche F. Le déplacement du support 105 dans le sens longitudinal est guidé par les parois latérales de la fente 111. La lecture optique du support 105 pendant son déplacement longitudinal par les deux capteurs ou organes de détection opto-électronique 113, 114 (ou transducteurs opto-électriques), donne naissance à des successions ou séquences de signaux rectangulaires $V_A$ et $V_B$ dont les premiers $V_A$ représentent les états "1" et les seconds $V_B$ les états "0" des mots binaires séquentiels qui peuvent être acquis par le chargement en série d'un registre à décalage, après mise en forme et combinaison idoine des deux.

La figure 9 représente les formes d'ondes des signaux $V_A$ et $V_B$ fournis par les deux organes de détection 113 et 114. Ensemble, les signaux $V_A$ et $V_B$ représentent le nombre 01100011 qui est le second mot représenté sur le support 105 de la figure 8, lorsqu'il est lu de droite à gauche, c'est-à-dire dans le sens du déplacement symbolisé par la flèche F.

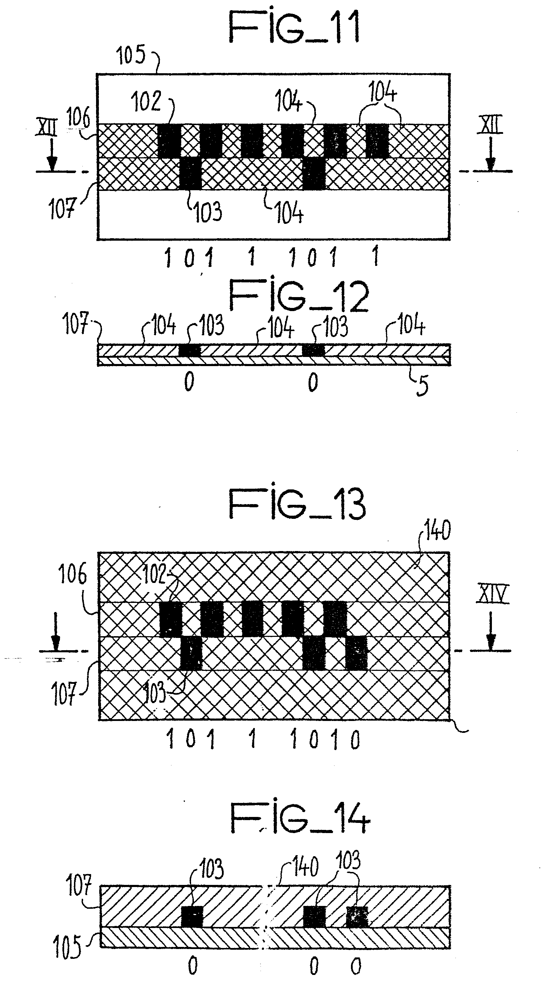

L'acquisition des mots (octets) stockés sur le support 105 peut être effectuée, soit séquentiellement, soit sous forme parallèle après mémorisation dans au moins un registre à décalage dont l'avance peut être commandée par les fronts montants des signaux $V_A$ et $V_B$ de la figure 11, par exemple.

Le type d'acquisition séquentielle peut être rendue synchrone par l'intermédiaire de registres à décalage à chargement auto-piloté par le signal lui-même et à lecture série avec déchargement ou rebouclage synchronisés par une horloge. L'acquisition séquentielle directe simplifie l'architecture du système de traitement et accroît sa fiabilité. La séparation et l'identification des mots (octets) successifs du support 105 peuvent être effectuées par simple comptage des impulsions $V_{113}$ et $V_{114}$ combinées (porte "OU") issues des deux lecteurs, du fait que les états "1" et "0" sont respectivement représentés par des impulsions de même polarité.

On notera enfin que le support d'information 105 de la figure 8 utilisant le "code optique à barres double" avec deux pistes orientées parallèlement à son déplacement dans le double lecteur optique 112 de la figure 8, peut être réalisé de multiples façons. Par exemple, il peut avoir une épaisseur quelconque, un format rectangulaire quelconque (de préférence, compris entre ceux d'un ticket de transport urbain et ceux d'une carte de crédit).

Pour rendre impossible la reproduction frauduleuse du message ou code sur un tel support par des moyens photographiques simples, on a proposé ci-dessus de rajouter aux barres 102 et 103 d'un support 105 de la figure 8, ayant une réponse optique ou spectrale prédéterminée aux rayonnements émis par la source lumineuse du capteur opto-électronique, aux endroits où au niveau d'un espace séparant deux barres 102 ou 103 successives sur une piste 106 ou 107, il n'y a pas de barres 103 ou 102 sur l'autre piste 107 ou 106, des barres factices également appelées barres-leurre, ayant un aspect ou apparence visible semblabe aux barres normales ou significatives 102 et 103, mais une réponse optique ou spectrale par rapport au rapport du rayonnement émis par la source du capteur, inverse ou différente de celle de ces dernières, de telle sorte que la réponse du détecteur de rayonnement à leur niveau est analogue à celle correspondant à un espace. Plus précisément, les barres-leurre ou factices ayant sur l'oeil ou la lumière utilisée pour la photocopie un effet analogue aux barres normales ou significatives 102 ou 103, ils présentent, lors de leur lecture par un capteur à réponse spectrale déterminée, différente de celle de l'oeil, un effet analogue à une absence de barres, c'est-à-dire à un espace de séparation.

La figure 10 est une vue en plan d'une carte optique du type précité utilisant le code à barres double, qui a été muni à divers endroits de barres-leurre ou factices, représentées à l'aide de hachures, mais ayant un aspect visible et un effet photographique analogue à celles des barres normales ou significatives.

Sur la carte d'accès 105, le message ou code d'accès D comprend trois mots A, B et C de huit éléments binaires ou bits chacun, qui sont appelés octets ("byte" en anglais). Lorsque l'on utilise le code à barres double selon le mode de réalisation illustré sur la figure 8, il se produit que quand, dans un octet, une valeur binaire donnée "0" ou "1", représentée par une barre 103 ou 102 sur l'une des pistes 107 ou 106 est suivie n fois (n supérieur à 1) par son complément "1" ou "0" représenté chacun par une barre 102 ou 103 sur l'autre piste 106 ou 107, la prochaine barre 103 ou 102 qui représente la valeur binaire "0" ou "1" consécutive à cette succession de n (entier et supérieur à 1) compléments, est séparée de la barre 103 ou 102 précédente sur la même piste 107 ou 106 de 2n-1 espaces élémentaires vides sur cette piste 107 ou 106.

On peut donc utiliser n-1 de ces 2n-1 espaces vides pour y placer des barres factices qui sont désignées par les repères 120 et 130, lorsqu'elles sont respectivement situées sur les pistes 106 et 107.

Autrement dit, dans un octet constituant un mode du code d'accès, seuls les espaces vides d'une piste donnée 106 ou 107 au niveau desquels l'autre piste 107 ou 106 comporte un autre espace vide et qui sont séparés de deux barres 102 ou 103 consécutives de la même piste 106 ou 107 par au moins un espace vide de chaque côté, peuvent être utilisés comme emplacement de barres factices 120 ou 130.

Sur la figure 10, le mot de gauche A du code d'accès comprend une barre factice 130 sur la piste 107 au niveau d'un espace libre séparant deux barres 102 consécutives sur la piste 106 et une barre factice 120 sur la piste 106 en regard d'un espace libre séparant deux barres 103 consécutives sur la piste 107. Le mot du milieu B ne comprend qu'une barre factice 130 sur la piste 107 et le mot de droite C qui est composé d'une alternance de "1" et de "0", n'en comprend aucune.

D'autres emplacements possibles des barres factices sont avant le début et après la fin du message d'accès. On a ainsi représenté sur la figure 10, une première barre factice 134 précédant la première barre significative 102 du premier mot A (dans le sens de la lecture indiquée par la flèche F) et une seconde barre factice 121 suivant la dernière barre 103 significative du dernier mot C, qui peut être suivie d'une troisième barre factice 132.

Lorsque le dernier digit significatif d'un mot B représenté par une barre 102 ou 103 sur l'une des pistes 106 ou 107 présente la même valeur binaire "1" ou "0" que le premier digit significatif du mot suivant C représenté par une barre 102 ou 103 qui est séparée de la précédente par un espace 101, il est possible de placer entre les deux mots B et C une barre factice 133 sur l'autre piste 107 ou 106.

Par contre, si le dernier digit d'un mot A est complémentaire au premier digit du mot suivant B, l'espace 110 qui sépare les deux mots A et B doit rester libre.

Dans un mode de réalisation décrit ci-dessus où la carte d'accès est réalisée sur un support en papier clair réfléchissant des rayons infrarouges, on peut utiliser, par exemple, pour réaliser des barres significatives 102 ou 103 une encre noire d'imprimerie du type 1807/6 qui absorbe les rayons infrarouges et pour réaliser les barres-leurre ou factices 120, 121, 130, 134, 132 et 133, une encre également noire du type 1863/IR qui est transparente aux rayons infrarouge et qui sont toutes les deux fabriquées par la société française dite "Y'SO" (sise à 80480 Bacouel-sur-Selle).

Lorsque l'on utilise un support qui réfléchit les rayons infrarouges, la lecture optique peut être effectuée à l'aide d'un capteur à réflexion, tel qu'un photointerrupteur (appelé "OPIC" par son fabricant) du type GP-2A01 fabriqué par la société japonaise dite "SHARP CORPORATION" (sise à Osaka au Japon). Un tel capteur comporte une source de rayonnement infrarouge constituée par une diode émettrice de lumière en arséniure de gallium (AsGa), un élément détecteur de rayonnement (de type "OPIC") constitué par une photodiode ayant une réponse spectrale appropriée, précédée d'un filtre optique éliminant la lumière visible et qui est suivie en cascade d'un amplificateur opérationnel intégré muni d'un circuit de commande automatique de niveau ("automatic level control" en anglais), d'une bascule de Schmitt et d'un étage de sortie équipé d'un transistor bipolaire à collecteur ouvert. La photodiode étant au silicium, cet ensemble, à l'exception de la diode émettrice d'infra-rouge (AsGa), est réalisé sur un même substrat sous la forme d'un circuit intégré monolithique. Un tel capteur fournit un signal rectangulaire ou impulsionnel (grâce à la présence de la bascule de Schmitt) dont les niveaux sont compatibles avec ceux des circuits intégrés logiques de type TTL, par exemple.

Alternativement, lorsque le support utilisé absorbe les rayons infrarouges, l'encre utilisée pour les barres factices devra également les absorber ou être transparente aux infrarouges, et il faudrait utiliser pour les barres significatives une encre de même couleur réfléchissant les rayons infrarouges (ou les recouvrir d'un vernis réflecteur).

On peut voir de ce qui précède que, lorsque l'on utilise le code à barres double dans sa version de la figure 8, où la succession de deux signaux complémentaires dans un octet est représentée par des barres 102, 103 successives respectivement placées sur les deux pistes 106, 107 sans espacement entre elles dans le sens de la lecture, il faut déterminer les emplacements des barres factices ou barres-leurrel, d'une part, selon la valeur numérique des octets pour détecter une succession de digits de même valeur et, d'autre part, par l'identité de valeur binaire entre le dernier digit d'un octet et le premier digit d'un octet suivant, ou encore suivant les valeurs binaires respectifs du premier et du dernier digit du message ou code d'accès.

Ceci peut être réalisé à l'aide d'un microprocesseur qui, après avoir calculé le message ou code d'accès d'après le code de la nature du service et, éventuellement, le code de la période d'abonnement ou d'accès autorisé, le met en mémoire et l'analyse de façon à déterminer les emplacements possibles des barres factices. Les résultats du calcul de ces emplacements peuvent également être mémorisés suivant leurs valeurs numériques correspondantes dans deux registres distincts. La mise en mémoire des digits significatifs du code d'accès peut être effectuée sur deux registres dont l'un mémorise la succession des valeurs binaires calculées et l'autre leurs compléments, afin de respectivement commander, lorsqu'on les lit en série, l'impression successives des barres significatives sur les deux pistes 106 (valeur normale) et 107 (complément). Les registres contenant les barres-leurre peuvent être lues en série simultanément avec ceux contenant les barres significatives de façon à commander respectivement l'impression des barres factices à encre transparente aux rayons infrarouges et celle des barres significatives à encre absorbante.

Il est également à noter que si l'on utilise tout autre type de code à barres où la largeur d'espacement entre les barres significatives n'a pas de signification numérique, il est également possible d'insérer des barres-leurre entre les barres significatives de façon aléatoire. Avec un code à barres tel que l'UPC ("United Product Code"), où les espaces ont une signification numérique, mais où l'on rencontre des espaces de triple longueur, on peut le brouiller en ce qui concerne la lumière visible par l'insertion d'une barre-leurre de longueur unitaire au milieu d'un tel espace triple à condition de n'utiliser pour leur lecture optique que des capteurs analogues à ceux du type décrit, à réponse spectrale limitée à l'infrarouge, qui permettent d'assimiler les barres-leurre à des espaces.

Dans le mode de réalisation préféré d'un titre ou d'une carte d'accès ou d'abonnement décrit ci-dessus, on utilise un support plan de format rectangulaire, où l'une des pistes 106 ou 107 est imprimée sur l'un des côtés et l'autre piste 107 ou 106 sur l'autre côté du support. Il est également avantageux d'utiliser un support en matériau plastique d'une certaine épaisseur et présentant des propriétés optiques analogues à ceux des barres-leurre vis-à-vis du capteur utilisé, les barres significatives ayant des propriétés optiques inverses (soit absorption et réflexion, soit transmission et réflexion, ou encore transmission et absorption, c'est-à-dire transparence et opacité), les encres respectivement utilisées devant présenter sensiblement la même couleur en contraste avec celle du support.

Autrement dit, la réponse des deux encres à la lumière visible, vis-à-vis de l'oeil nu ou des équipements photographiques ou de photocopie, doit être sensiblement la même, tout en assurant dans une bande spectrale déterminée une réponse différente. Le capteur opto-électronique de lecture devra donc utiliser une source émettant du rayonnement dans cette bande spectrale et un détecteur de ce rayonnement avec une réponse spectrale analogue ou précédé d'un filtre éliminant le reste du spectre.

Selon l'un des modes de réalisition du présent mode de réalisation avantageux, illustré sur la figure 11 en plan et sur la figure 12 en coupe selon XII-XII les espaces entre les barres 102 et 103 sont entièrement occupés par des barres factices ayant un même aspect à l'oeil que les barres vraies ou significatives et une réponse au rayonnement de la source du capteur opto-électronique analogue à celle du support, de sorte que l'élément photosensible de ce capteur fournit en réponse à une barre vraie, un état logique donné et en réponse à une barre factice de même aspect, un état logique complémentaire.

Sur la figure 11, on a représenté en plan un support d'information 105 portant, respectivement disposées sur deux pistes parallèles 106, 107, des barres significatives 102 et 103. Les espaces entre ces barres 102, 103 portent des couches ou plages de camouflage 104 d'une même couleur ou d'un même aspect optique (pour l'oeil nu ou pour un appareil photographique) que les barres vraies. Ces couches 104 sont représentées par des hachures.

Sur la figure 12, la carte de la figure 11 a été représentée par une coupe longitudinale selon la droite XII-XII pour montrer la disposition sur un support 105, des barres significatives 103 et des plages de camouflages 104 qui résulte d'un allongement des barres-leurre 120, 121 et 130 à 134 de la figure 10, qui ont la même réponse spectrale que le support 105.

Une telle réalisation simplifie grandement l'impression, qui par les barres-leurre de la figure 10 devait être effectuée à l'aide de moyens de calcul pour en déterminer les emplacements admissibles en fonction du message représenté par des barres vraies 102, 103. Dans un procédé avantageux de réalisation, il est possible d'imprimer les couches de camouflage 104 sur toute la longueur et largeur des pistes 106 et 107 et d'imprimer par-dessus, lorsque l'encre a séché, les barres significatives 102, 103 de même couleur, lorsque ces dernières sont absorbantes et les autres transparentes vis-à-vis du rayonnement infrarouge.

Sur les figures 13 et 14, on a représenté respectivement en plan et en coupe longitudinale selon XIV-XIV, le mode de réalisation préféré de la carte à lecture optique du présent mode de réalisation avantageux.

Pour sa réalisation, on imprime d'abord les barres significatives 102 et 103 en une encre absorbant les rayons infrarouges (encre noire du type 1807/6 de la société Y'SO précitée) sur une face d'un support 105 qui les réfléchit (papier clair ou matériau plastique). On recouvre ensuite la totalité de la ou des faces du support portant les pistes 106, 107 d'informations d'une couche de camouflage 140 en une encre transparente aux rayons infrarouges (encre noire de type 1863/IR de la même société), de sorte que cette couche 140 recouvre également les barres significatives 102, 103 et présente une surface uniforme de même couleur vis-à-vis de l'oeil nu.

En résumé, dans ce mode de réalisation avantageux, l'impression de la carte à lecture optique se réduit à l'impression du code à barre qui peut être quelconque, double ou non, en éliminant le problème de positionnement des barres-leurre du mode de réalisation précédent. En outre, il n'est plus nécessaire que les deux encres soient de la même couleur, car la couche d'encre 140 transparente au rayonnement infrarouge, lorsqu'elle est d'une épaisseur suffisante, recouvre entièrement les barres 102, 103 en les camouflant. Il constitue en outre une protection accrue contre la fraude par des moyens simples, car il faudrait pouvoir enlever la totalité de la couche 140 pour avoir accès au code en retrouvant l'emplacement des barres 102, 103 et même celui des pistes 106,

28

107.

Il est à noter que pour économiser de l'encre transparente, on peut ne recouvrir que les pistes portant les informations de cette couche de camouflage 140.

REVENDICATIONS

1. Carte à lecture optique portant des informations numériques sous la forme d'au moins une succession de barres (2, 3) et d'espaces (4, 10, 100) ayant respectivement des propriétés optiques différentes et détectables au moyen d'un capteur opto-électronique comprenant une source de rayonnement lumineux et un détecteur d'un tel rayonnement, caractérisée en ce que dans cette succession se trouvent insérées entre les barres (2, 3) significatives présentant une réponse optique ou spectrale déterminée, des barres factices (20, 21, 30, 31, 32, 33) présentant vis-à-vis de l'oeil ou des appareils de photographie ou photocopie un aspect analogue aux barres significatives (2, 3), mais par rapport au rayonnement émis par la source du capteur, une réponse analogue à celle des espaces (4, 10, 100).

2. Carte à lecture optique suivant la revendication 1, du type dans lequel les barres sont de dimensions constantes, caractérisée en ce que celles des barres significatives (2) représentant à un digit de valeur binaire "1" sont inscrites successivement sur une première piste (6), en ce que celles des barres significatives (3) représentant un digit de valeur binaire "0" sont inscrites sur une seconde piste (7) parallèle à la première (6), les barres successives, significatives (2, 3) ou factices sur une même piste (6, 7) étant séparées l'une de l'autre par un espace (4, 10, 100) dont la longueur dans le sens des pistes (6, 7) est sensiblement égale à celle d'une barre (2, 3) ou à un multiple entier de cette longueur, suivant un code à barres dit "double", la lecture de chacune des pistes (6, 7) étant effectuée à l'aide d'un capteur (13, 14) opto-électronique au cours des déplacements relatifs de la carte (5) et du capteur (13, 14) dans un sens déterminé, parallèle aux axes des pistes, de telle sorte que chaque capteur fournisse une succession d'impulsions correspondant à la succession des barres significatives (2, 3) sur une piste (6, 7).

3. Carte à lecture optique suivant la revendication 2, caractérisée en ce que les deux pistes (6, 7) parallèles sont respectivement disposées des deux côtés opposés du support (5).

4. Carte à lecture optique suivant l'une des revendications précédentes, caractérisée en ce que le support (5) est réalisé en un matériau plastique d'une épaisseur prédéterminée de façon à être rigide et dont les surfaces réflechissent les rayons infrarouges.

5. Carte à lecture optique suivant l'une des revendications 1 à 3, caractérisée en ce que le support (5) est réalisé en un papier de qualité réfléchissant les rayons infrarouges.

6. Carte à lecture optique suivant l'une des revendications 4 et 5, caractérisée en ce que l'encre utilisée pour imprimer les barres significatives (2, 3) d'une couleur déterminée est une encre qui absorbe le rayonnement infrarouge incident.

7. Carte suivant l'une des revendications 4 à 6, caractérisée en ce que l'encre utilisée pour imprimer des barres factices (20, 21, 30 à 33) de même couleur que celle utilisée pour imprimer des barres significatives (2, 3), est une encre qui est transparent au rayonnement infrarouge incident.

8. Carte à lecture optique suivant l'une des revendications 1 à 3, caractérisée en ce que le support (5) est réalisé en un matériau plastique ou autre absorbant le rayonnement infrarouge, en ce que l'encre utilisée pour réaliser les barres factices (20, 21, 30 à 33) de couleur déterminée absorbe le rayonnement infrarouge et en ce que l'encre utilisée pour réaliser les barres significatives (2, 3) de même couleur que les barres factices, réfléchit le rayonnement infrarouge.

9. Carte à lecture optique suivant la revendication 2, caractérisée en ce que la séparation entre deux barres (2, 3) successives d'un même mot (octet) signifiant respectivement deux valeurs complémentaires et, de ce fait, respectivement situés sur les deux pistes (6, 7) est sensiblement nulle, en ce que les barres factices (20, 21, 33 à 33) y sont insérées soit avant le début (31) ou après la fin (21, 32) du message ou code d'accès entier, soit entre deux mots (A, B) successifs dont le premier se termine et dont le second débute avec un digit de même valeur binaire, la barre factice (33) remplaçant alors une valeur complémentaire à celle de ce digit, ou encore, lorsqu'un mot comporte une succession de plusieurs digits de même valeur binaire, la barre factice (20, 30) étant placée sur l'autre piste de valeur complémentaire, entre les digits de même valeur par rapport aux axes des pistes (6, 7).

10. Système de contrôle d'accès utilisant une carte d'accès ou d'abonnement optique suivant l'une des revendications précédentes, caractérisé en ce qu'il comporte un lecteur optique (12, 72) muni de deux capteurs (13, 14, 73, 74) comprenant chacun une source de rayonnement de spectre déterminé qui provoque une réponse optique donnée en regard des barres significatives (2, 3) et une réponse complémentaire ou inverse en regard des espaces ou des barres factices (20, 21, 30 à 33), qui sont assimilées par le capteur à des espaces, tout en provoquant une réponse optique de l'oeil ou d'un appareil de photographie ou photocopie identique à celle provoquées par des barres significatives (2, 3), et un détecteur de ce rayonnement, qui peut être composé d'un filtre éliminant les spectres absents du rayonnement de la source et d'un photodétecteur à réponse spectrale plus large.

11. Carte à lecture optique suivant la revendication 1, caractérisé en ce que les barres factices occupent la totalité des espaces entre les barres significatives (102, 103) en y formant des plages ou couches de camouflage (104).

12. Carte à lecture optique suivant la revendication 11, du type dans lequel les barres sont de dimensions constantes, caractérisée en ce que celles des barres significatives représentant à un digit de valeur binaire "1" sont inscrites successivement sur une première piste (106), en ce que celles des barres significatives représentant un digit de valeur binaire "0" sont inscrites sur une seconde piste (107) parallèle à la première, les barres successives, significatives sur une même piste étant séparées l'une de l'autre par un espace dont la longueur dans le sens des pistes est sensiblement égale à celle d'une barre ou à un multiple entier de cette longueur, suivant un code à barres dit "double", et en ce que la couche de camouflage (104) recouvre au moins la totalité des espaces entre les barres sur les pistes.

13. Carte à lecture optique suivant l'une des revendications 11 ou 12, caractérisée en ce que le support (105) est réalisé en un matériau plastique d'une épaisseur prédéterminée de façon à être rigide et dont les surfaces réfléchissent les rayons infrarouges.

14. Carte à lecture optique suivant l'une des revendications 11 et 12, caractérisée en ce que le support (105) est réalisé en un papier de qualité réfléchissant les rayons infrarouges.

15. Carte à lecture optique suivant l'une des revendications 13 et 14, caractérisée en ce que l'encre utilisée pour imprimer les barres significatives d'une couleur déterminée est une encre qui absorbe le rayonnement infrarouge incident.

16. Carte à lecture optique suivant l'une des revendications 13 à 15, caractérisée en ce que l'encre utilisée pour imprimer les couches de camouflage, de même couleur que celle utilisée pour imprimer des barres significatives, est une encre qui est transparente au rayonnement infrarouge incident.

17. Carte à lecture optique suivant l'une des revendications 13 ou 14 et la revendication 15, caractérisée en ce qu'une couche de camouflage (140) unique en une encre transparente au rayonnement infrarouge recouvre les barres significatives de façon à les occulter.

18. Carte à lecture optique suivant la revendication 17, caractérisée en ce que la couche de camouflage unique recouvre la totalité de la ou des faces de la carte portant des barres significatives.

19. Système de contrôle d'accès utilisant une carte d'accès ou d'abonnement à lecture optique suivant l'une des revendications 11 à 18, caractérisé en ce qu'il utilise pour la lecture de chacune des pistes porteuses d'informations, un lecteur optique (113, 114) équipé d'une source émettant un rayonnement de spectre déterminé qui provoque une réponse optique différente suivant qu'il tombe sur une barre significative ou une couche de camouflage et d'un détecteur ayant une réponse limitée à ce spectre.

0122825

1/4

FIG_1

FIG_2

FIG_3

FIG_4

FIG_5

0122825

2/4

FIG_6

FIG_7

## FIG_8

102    105

106
107

103

01 10 0 01 1  1 10 0 01 10 01 10 01 10

111  112

113
114

F

$V_A$

$V_B$

## FIG_9

$V_A$         t

$V_B$         t

## FIG_10

105

106

102    120    102                      101         121

107

134  103  130    103      110    130    133              132

1 0 1  10  1 0 1   1 0 1  1 0 1 0 1   1 0 1 0 1 0 1 0

A                    B                    C

FIG_11

1 0 1   1   1 0 1   1

FIG_12

0        0

FIG_13

1 0 1   1   1 0 1 0

FIG_14

0        0 0

**0122825**

Office européen
des brevets

**RAPPORT DE RECHERCHE EUROPEENNE**

EP 84 40 0473

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | US-A-4 359 633 (BIANCO)<br><br>* Figures 1,2,4; colonne 3, ligne 17 - colonne 4, ligne 55; colonne 4, lignes 17-27; colonne 1, lignes 7-17 * | 1,2,4-7,10,12,19 | G 06 K 19/08<br>G 07 F 7/08 |
| A |  | 11,13-18 |  |
|  | - - - |  |  |
| Y | DE-A-3 109 288 (APITZ et al.)<br>* Figures 1,2; page 10, ligne 12 - page 11, ligne 31 * | 1,4-7 |  |
|  | - - - |  |  |
| Y | FR-A-2 409 556<br>(BSG-SCHALTTECHNIK)<br>* Figures 11,12; page 27, ligne 9 - page 31, ligne 23; page 1, lignes 1-10 * | 2,10,12,19 | **DOMAINES TECHNIQUES RECHERCHES (Int. Cl. 3)**<br><br>G 06 K 19<br>G 07 F 7 |
|  | - - - |  |  |
| A | US-A-3 621 589 (JONES et al.) |  |  |
|  | - - - |  |  |
| A | WO-A-8 100 776 (STOCKBURGER) |  |  |
|  | - - - - - |  |  |

Le présent rapport de recherche a été établi pour toutes les revendications

| Lieu de la recherche | Date d'achèvement de la recherche | Examinateur |
|---|---|---|
| LA HAYE | 25-06-1984 | FORLEN G.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82